Europäisches Patentamt

European Patent Office

Office européen des brevets

(11) Publication number: **0 257 087 B1**

# EUROPEAN PATENT SPECIFICATION

(45) Date of publication of patent specification: **14.10.92**  (51) Int. Cl.⁵: **H01S 3/036**, H01S 3/22

(21) Application number: **87901804.2**

(22) Date of filing: **30.01.87**

(86) International application number:
**PCT/US87/00210**

(87) International publication number:
**WO 87/04872 (13.08.87 87/18)**

(54) **LARGE VOLUME GASEOUS ELECTRIC DISCHARGE SYSTEM.**

(30) Priority: **03.02.86 US 825152**

(43) Date of publication of application:
**02.03.88 Bulletin  88/09**

(45) Publication of the grant of the patent:
**14.10.92 Bulletin  92/42**

(84) Designated Contracting States:
**DE FR GB**

(56) References cited:
**US-A- 3 638 140**
**US-A- 3 761 836**
**US-A- 3 876 959**
**US-A- 4 031 485**
**US-A- 4 541 097**

(73) Proprietor: **HILL, Alan E.**
**Box 5444A Route 5**
**Albuquerque, NM 87123(US)**

(72) Inventor: **HILL, Alan E.**
**Box 5444A Route 5**
**Albuquerque, NM 87123(US)**

(74) Representative: **Jackson, Peter Arthur et al**
**Gill Jennings & Every, 53-64 Chancery Lane**
**London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to a method and an apparatus for controlling gas flow within a laser channel to provide a uniform large volume plasma, and more particularly, to a method and apparatus for providing a mixed and diffused gas flow via recirculation of only a portion of the gas at a velocity substantially higher than that of the remaining gas flow.

One of the problems encountered when a laser system is designed for use in an industrial environment is the compactness, size and reliability of the system. Lasing action is obtained by subjecting a gas filled vessel or channel to an electric discharge to form a plasma. The electrons provided by the discharge collide with active gas molecules thereby exciting them to higher energy levels, from which they descend to lower energy levels and emit excess energy in the form of photons or light quanta. The density of particles in the higher energy level must exceed that in the lower energy level to achieve optical gain. The addition of helium to a mixture of carbon dioxide and nitrogen has been found to yield increased output.

An electrical discharge having a large cross sectional area which will uniformly fill large volume cavities regardless of size or shape is mandatory if powerful and reliable lasers suitable for industrial applications are to be developed. An electrical discharge is normally very restricted in diameter because the temperature in different parts of the discharge is not uniform. This results in lower density and higher current at the inside of the plasma column, thus constricting the column. Individually ballasting a plurality of electrodes offers a partial solution by spreading the emission, but the streams tend to recombine. Judicious use and design of aerodynamic forces to control the ion and electron distribution in a large volume discharge have achieved some success and have resulted in a degree of compactness and reduction in size for the same power output, as measured against the very long discharge systems known in the prior art.

Lasers have been used to reduce production costs in those applications requiring cutting, welding, drilling, heat treating, and other processes. However, according to industry publications, laser sales are only about three percent of the machine tool industry. Industrial application of lasers has been limited in the past because of the limitations of poor reliability, poor beam quality, large size, and heavy weight. These problems, coupled with the high cost of lasers per watt of output, have caused the machine tool industry and other industries, which can use lasers, to proceed very slowly in their implementation. As an example of the size and weight problem, current high power (1 kw and up) continuous wave lasers measure about 6.71 m (22 feet) long by 2.14 m (7 feet) wide by 1.68 m (5.5 feet) high and weigh several tons.

Improved reliability would enable industry to utilize lasers on production lines. Improved beam quality would make industry applications such as hardening or softening of metals, or adhering materials economical. Miniaturization of structure would open the field of robotics to new applications. Lower costs would mean other equipment could be replaced by lasers.

US-A-3,581,146 relates to a method of ballasting a gaseous discharge-tube system wherein a plurality of tubes are excited from a single power source.

US-A-3,735,284 teaches the use of aerodynamic forces to control the spatial distribution of charge in a laser system to obtain a uniform plasma.

US-A-3,795,838 also shows the use of aerodynamic forces to obtain uniform plasma in a laser system. It is important to note that both this and the previously mentioned patent obtain the desired uniform plasma by recirculation of the entire lasing medium. Accordingly, a portion of the gains obtained in reduced laser size and weight are offset by the necessity of the large volume compressors.

Reference is made to the following publications for those relationships and definitions used herein:

"An investigation of Ejector Design by Analysis and Experiment" by Keenan, Neumann, and Lustwerk; Journal of Applied Mechanics; September 1950; page 299;

"Gaseous conductors - Theory and Engineering Applications"; James D. Cobine Ph.D.; Dover Publications, Inc.; 1958 Edition; and

"Basic Data of Plasma Physics" by Sanborn C. Brown, M.I.T. Press; 1959 Edition.

In accordance with the present invention, a laser system having a high power output comprises a housing, a gas lasing medium in the housing, a laser channel in the housing, and means for providing continuous recirculating flow of the gas lasing medium through the channel. A plurality of electrodes are positioned at the upstream end of the housing adjacent one end of the channel, and a plurality of electrodes are position at the downstream end of the housing adjacent the other end of the channel. A source of electrical power connects the electrodes for establishing and maintaining discharges in the channel, and means draws forth a beam of light energy from the channel. A diffusing means provides a uniform plasma flow in the channel and a pressure rise to balance the pressure drop from recirculating flow through the channel. The diffusing means is comprised of an ejector disposed downstream from each respective upstream electrode for mixing and diffusing gas streams into the laser channel.

The invention also includes a method of operating a $CO_2$ laser system in accordance with the invention; the method comprising creating a plurality of parallel discharges between the upstream and downstream electrodes to give a uniform large volume gaseous discharge in the laser channel; guiding a primary stream of the gas lasing medium in a recirculating path through the channel wherein a pressure drop results; and introducing a secondary stream of the gas lasing medium at a higher pressure into the primary stream through the ejectors to effect diffusion of the streams, a pressure rise equal to the recirculating path pressure drop, and an increase in mass flow through the channel.

Thus the large pump previously needed for state of the art lasers is sharply reduced in size, weight, and capacity, leading to higher system efficiency, lower manufacturing costs, lower input energy requirements, and lower cost per watt of output. The laser has high reliability and exceptional beam quality at high power.

In the accompanying drawings:

Fig. 1 is a schematic view of a gas laser embodying the present invention;

Fig. 2 is a sectional view of an ejector diffusing a plurality of lasing gas streams;

Fig. 3 is a sectional view of the ejector of Fig. 2 showing the blending of lasing gas streams;

Fig. 4 is a sectional view of the ejector of Fig. 2 showing the radial component of gas stream and showing the uniform velocity distribution of the lasing gas; and

Figs. 5 through 8 are longitudinal sectional views of the laser showing four different means for applying magnetic fields to the lasing gas stream.

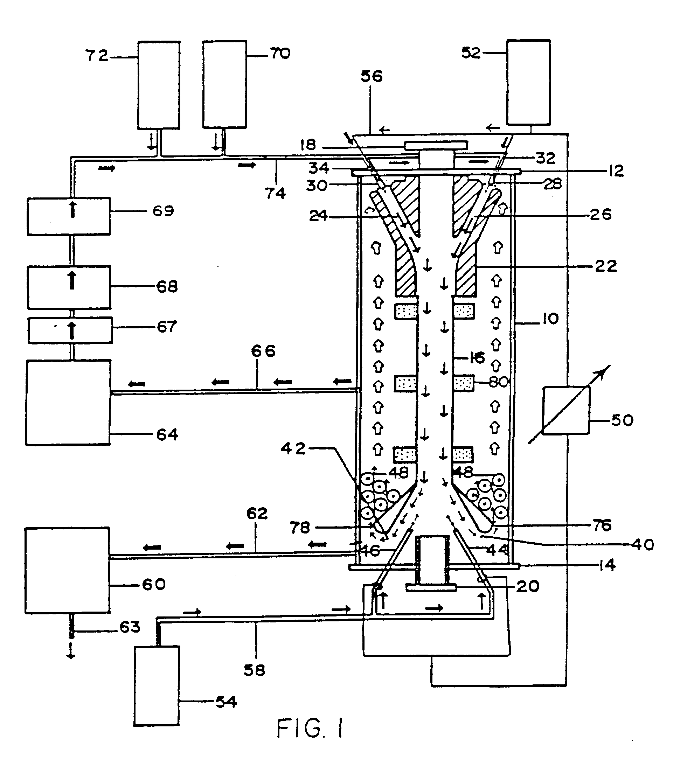

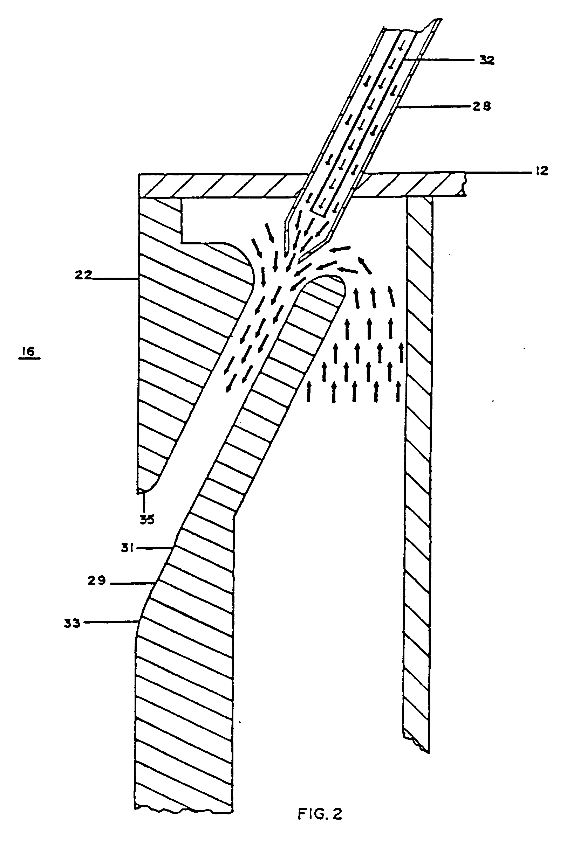

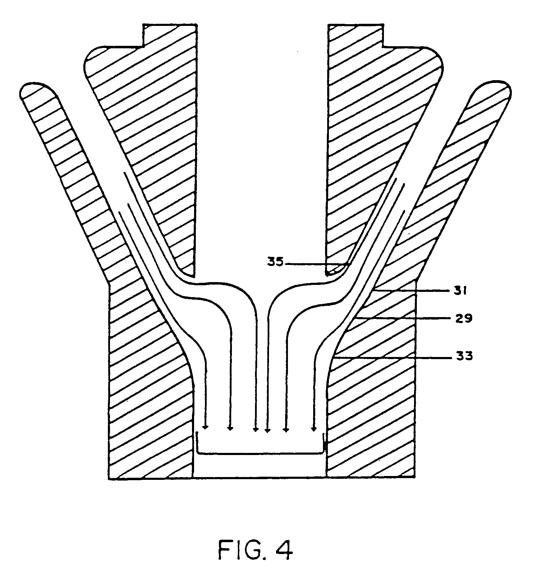

As more fully disclosed hereinafter, this embodiment provides for mixing and pumping lasing gas streams in a laser having a primary, recirculating, gas stream. Fig. 1 shows a gas laser having the structure shown in more detail in Figs. 2, 3 and 4. The laser assembly has a cylindrical housing 10 sealed to end walls 12 and 14 to form an enclosed housing. A laser channel 16 is disposed concentric with housing 10, and mirror 18 and output coupler 20 are fixed at opposite ends of the channel. Channel 16 is joined to a frustoconical member 22 having a plurality of equally spaced, cylindrical passages or tubes 24,26 formed at an acute angle with the axis of symmetry of the channel and serving as mixing tubes 24,26 for the gas streams. Main nozzles 28,30 are fixed adjacent each respective mixing tube. Hollow electrodes 32,34 are positioned within and concentric with each respective main nozzle 28,30 and are connected to a source of high voltage electrical power 50 through conductors 56 to provide the electric discharge for lasing action.

A diffusing means provides a uniform plasma flow in the laser channel 16 to Provide a pressure rise to balance the pressure drop from recirculating flow through the laser channel 16. The diffusing means pressurizes only a portion of the gaseous lasing medium and delivers the pressurized portion into the laser channel 16 at a preselected velocity substantially greater than the velocity of the primary recirculating gas. The diffusing means includes a plurality of ejectors annularly distributed about the laser channel 16 and a pump 64 fluidicly connected between the primary gas flow stream and the ejectors. Each ejector introduces a secondary gas stream to effect diffusion, turbulence, a pressure rise, and an increase in mass flow. Ballast for the discharge streams may be provided by the device shown in US-A-3,581,146 identified above. It has been found that an exceptional and unusual characteristic of the ejector contributes significantly to the turbulence and diffusion of the lasing gas streams. The ejectors include the primary nozzle 28,30 and the associated mixing tube 26,24. As the high velocity secondary gas stream emerges from the ejector nozzle 28,30 it enters the mixing tube 24,26, which is of a generally cylindrical form, and the gas from the primary recirculating stream is thus entrained by massive collisions between gas molecules. Vortices result from the collisions and these vortices blend the several streams homogeneously. The angular velocities of the vortices diminish as the blended gases progress downstream. An aerodynamic contour is formed at the exit area of the mixing tube to develop radial components of flow to the blended gas streams. This yields a homogeneous longitudinal flow in the laser channel with uniform radial velocity distribution.

Figs. 2, 3, and 4 show the profile of the mixing tubes 24,26 and, more specifically, the aerodynamic contour formed at the exit area. As viewed in section the tubes 24,26 terminate on one side in a reverse ogee 29 comprising a first curve 31 blending into a second curve 33. The first surface 31 is curved at a first preselected radius in a direction extending radially outward from the longitudinal center of the mixing tube 24, and the second surface 33 is curved at a second preselected radius in a direction radially inward toward the longitudinal center of the mixing tube 24. The second curved surface 33 is positioned intermediate the laser channel 16 and the first curved surface 31. A radius section 35, opposite the reverse ogee 29, registers with the second curve. This aerodynamic contour is material in the development of a radial component in the gas stream as it exits the mixing tube. The reaction of the gas stream with the exit contour results in an homogeneous gas flow stream in the contour area and the laser channel with microturbulent, uniform velocity distribution as shown by the flow arrows and wave front profile. Unless the velocity distribution is uniform in cross section, those regions which flow more slowly will become preferentially heated, and these hotter regions become less dense. This leads to an optical disturbance of the laser beam, and can ultimately produce an electric arc.

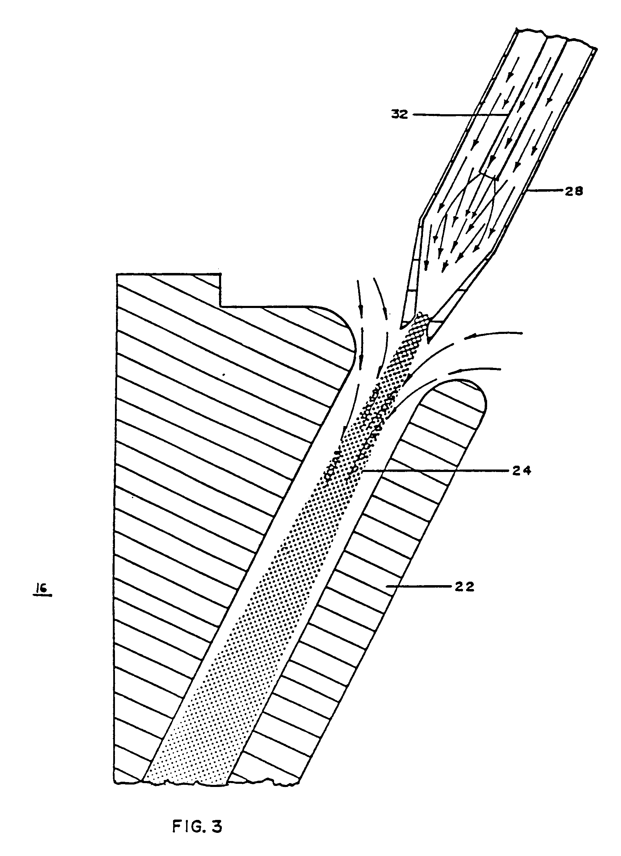

Laser channel 16 is interrupted as shown by reference characters 40 and 42 to allow recirculation of gas through the housing and into the mixing tubes 24,26, as shown by the flow arrows. Hollow electrodes 44 and 46 are connected to electrical source 50 to complete the discharge circuit. The arrows in Figs. 1, 2, 3, and 4 illustrate the gas streams flow. The primary stream is the recirculating stream which flows through channel 16, out of interruptions 40 and 42, through the volume between channel 16 and housing 10 and is entrained by the ejectors which introduce a high velocity secondary gas stream and vortices into the mixing tubes as seen in Fig. 3. A series of cylindrical finned heat exchangers, shown generally by numeral 48, are positioned adjacent the interruptions 40,42 to control the lasing gas temperature. Helium under pressure in tanks 52 and 54 is fed to electrodes 32,34,44,46 through piping 56,58.

A lasing gas bleed system for optimum continuous and predictable results is provided to remove impurities including, for example, oil, carbon monoxide, and hydrocarbons from the lasing gas. The system comprises an exhaust pump 60 connected to housing 10 by pipe 62 and having another exhaust pipe 63 leading to an appropriate storage vessel (not shown). A positive-displacement circulating pump 64 is connected to housing 10 by pipe 66 and heat exchanger 68 substantially as shown. Nitrogen gas and carbon dioxide gas under pressure are held in tanks 70 and 72 and are connected to piping 74 and thence to primary nozzles 32 and 34. A catalytic converter 67 converts by chemical reaction any CO formed in the system to $CO_2$. An electric heating system (not shown) is provided to maintain the gas temperature at the proper level for the converter 67 to function. A molecular sieve 69 is provided to prevent the gas from being poisoned by impurities.

A plurality of annular magnets 80, shown as permanent magnets, embrace laser channel 16 and are longitudinally spaced thereon for a purpose to be explained.

In the operation of the device the circulating pump 64 establishes a pressure to create a high velocity lasing gas flow through catalytic converter 67, heat exchanger 68, piping 74, the annular array of primary nozzles 28,30, and the annular array of mixing tubes 24,26 into the laser channel 16. Flow continues through the laser channel 16, out of the interruptions 40,42, around the vanes 76,78, past the heat exchanger 48, and back into mixing tubes 24,26 in a recirculating mode flow substantially as shown by the arrows. The operation of the ejector in mixing and diffusing the lasing gas streams results in a uniform, large volume gaseous discharge in the laser channel. Referring now to Figs. 2 and 3 it will be seen that very high velocity gas emerges from each primary nozzle 28,30 and enters its respective mixing tube 24,26. As represented in the figures a relatively conical boundary layer of gas enters the mixing tube and flares outwardly in the tube as it progresses down its length. The gas molecules from the recirculating primary gas stream are entrained by the boundary layer's mass velocity. Gas vortices result from the collisions between gas stream molecules traveling at different velocities and the vortices intimately mix and blend the streams. The annular velocity of the vortices diminish as the blended gas stream move downstream and result in complete diffusion of the gas streams and a homogeneous and uniform gas mixture. In one example of the system the cross sectional area ratio of each respective mixing tube to the throat of each respective primary nozzle is about 27.5 to 1. It is contemplated that other ratios can be used; the stated ratio has been shown to be advantageous.

The laser beam output emerges through the output coupler 20 substantially parallel to the primary gas stream. By a rearrangement of the optical system, the beam output can be made to emerge transverse to the longitudinal axis of channel 16. This system is well and truly shown and illustrated in Fig. 12 of US-A-3,795,838 identified above. In the present embodiment, a horizontally distributed ejector pump array is substituted for the nozzle block shown in Fig. 12 of the patent.

In the closed cycle or recirculating lasing gas mode, contamination of the lasing gas by oil, dust, impurities, ozone, carbon monoxide or chemical reactions within the system gives rise to serious attachment instability problems and will affect system power output and reliability by poisoning the gas. The catalytic converter 67 and molecular sieve 69 prevent the gas from being poisoned. Heat exchanger 68 dissipates heat and thereby cools the lasing gas to optimum temperature. An exhaust pump 60 and its associated plumbing 10,62,63 is provided to allow the composition of the lasing gas to be monitored, as by taking periodic samples, so that the optimum gas mixture can be maintained if necessary by introducing fresh gas from tanks 52,54,70,72.

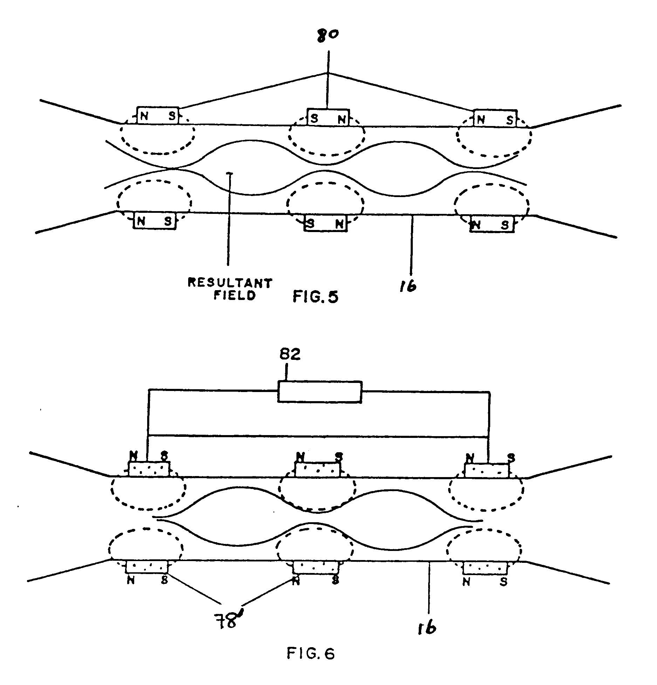

Referring now to Figs. 5 to 8 inclusive, it has been found that in the design of an industrial laser wherein continuity of operation and reliability are material factors, the addition of a magnetic field which interacts with the plasma flowstream ensures a homogeneous discharge plasma by inhibiting the growth of thermal instabilities within the discharge. Thermal instabilities are incipient arcs which align with the flowstream and unless controlled prevent a laser from delivering its full power output. If an arc develops it could burn and destroy the laser optical system and will short circuit the laser cavity. Thus, Figs. 5 to 8 illustrate various embodiments of a means surrounding the laser channel 16 for generating magnetic fields to cross couple thermal and attachment instabilities.

Fig. 5 shows the static magnetic field produced by the permanent magnets 80 with poles opposed. In this example, the interaction of the field with the flowstream does no work and neither adds nor subtracts energy from the system. The lines of force produce a static resultant undulating magnetic field which rises and falls in strength or intensity in the direction of plasma flow. As the lasing gas flows it reacts with the undulating magnetic field thus produced and changes the electron flow pattern by giving the electrons a velocity component at right angles to the flow, causing migration of charged particles and mixing of hot and colder regions to prevent the growth of thermal instabilities. A more uniform plasma results.

Fig. 6 shows another embodiment wherein a static magnetic field is produced by D.C. excited electromagnets 78'. The field reacts with the lasing gas as in the preceding example and thus changes the electron flow pattern to yield an homogeneous plasma. It follows, however, that the magnetic field produced by the voltage source 82 is variable in intensity and can be controlled externally by controlling the applied D.C. voltage.

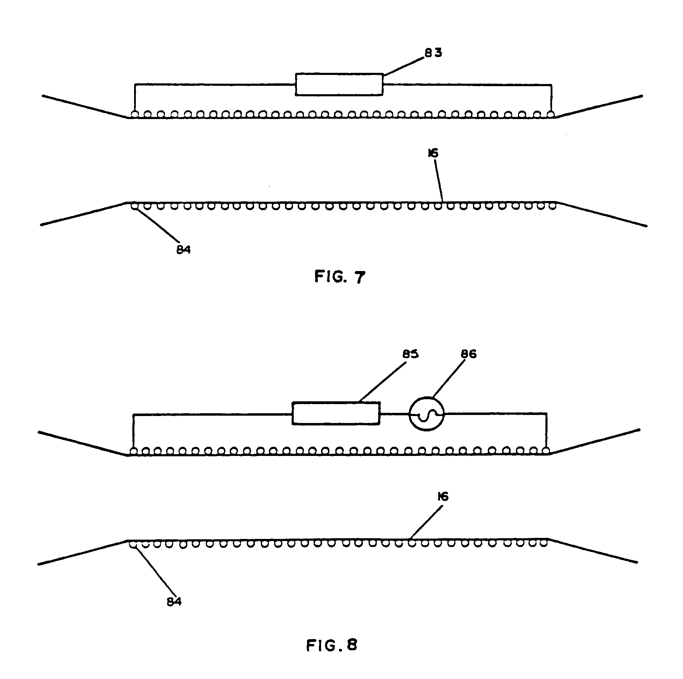

The embodiment shown in Fig. 7 has an elongate electromagnet 84 embracing a substantial segment of the channel 16. When excited by a D.C. voltage source 83 an axially uniform distributed magnetic field results which prevents development of thermal instabilities by distributing the magnetic lines of force in the direction of the lasing gas flowstream. The action of this field will prevent thermal instabilities by guiding the charged particles in substantially parallel paths in the laser channel.

The Fig. 8 embodiment shows an oscillator 86 which superimposes an A.C. field upon the D.C. field from power supply 85. The interaction of the two energy sources with the distributed coil electromagnet 84 creates an undulating magnetic field at right angles to the direction of lasing gas flow. The work to compress and expand the field is supplied by the oscillator and causes a radial direction of motion of charged particles to homogenize the gas. To avoid standing wave-patterns, the oscillator frequency must exceed the gas flow-through time several fold.

The principles described above have been embodied in a 5\kw laser. It has been found that the level of plasma control obtained removes constraints on the laser geometry so that large volume cavities can be uniformly filled with plasma, and one can thus design an optimum optical system. Very large and sturdy optical mirrors can now be used, resulting in a lower flux density and thus preventing warping and destruction from heat. The technology eliminates the necessity for very delicate, fragile, and expensive optical systems which are not necessarily adaptable to industrial use.

It is expected that the use of plasma control to uniformly fill a large volume cavity will allow a 5\kw laser having dimensions of approximately 0.61m (two feet) by 0.61m (two feet by 0.30m (one foot) thereby enabling use on a robot arm.

There has been described a high power laser gaseous discharge system which has high reliability and exceptional beam quality at high power, but at reduced size and weight.

## Claims

1. A laser system having a high power output comprising a housing (10,12,14), a gas lasing medium in the housing (10,12,14), a laser channel (16) in the housing, means for providing continuous recirculating flow of the gas lasing medium through the channel, a plurality of electrodes (32,34) at the upstream end (12) of the housing (10,12,14) adjacent one end of the channel (16), a plurality of electrodes (44,46) at the downstream end (14) of the housing (10,12,14) adjacent the other end of the channel (16), a source of electrical power (50) connected to the electrodes (32,34,44,46) for establishing and maintaining discharges in the laser channel 16, diffusing means for providing a uniform plasma flow in the channel and for providing a pressure rise to balance the pressure drop from recirculating flow through the channel (16), the diffusing means comprising an ejector disposed downstream from each respective upstream electrode (32,34) for mixing and diffusing gas streams into the laser channel (16), and means to draw forth a beam of light energy from the channel (16).

2. A laser system as set forth in claim 1, wherein each ejector comprises a primary nozzle (28,30) and a mixing tube (26,24), each primary nozzle (28,30) being connected to a source (64) of lasing gas pressure external to the housing (10,12,14).

3. A laser system as set forth in claim 2, including a heat exchanger (68) disposed external to the housing (10,12,14) and being in fluidic communication with the primary nozzle (28,30).

4. A laser system as set forth in claim 2 or claim 3, wherein each mixing tube (26,24) has an aerodynamic contour formed at its exit area.

5. A laser system as set forth in claim 4, wherein the aerodynamic contour comprises a reverse ogee curve (29) on one side of the mixing tube and a radius section (35) on the other side to impart a radial component to the gas stream flow upon exit.

6. A laser system as set forth in any one of claims 2 to 5, wherein the cross sectional area ratio of each respective mixing tube (24,26) to the throat of each respective primary nozzle (30,28) is substantially 27.5 to 1.

7. A laser system as set forth in any one of the preceding claims, including means surrounding the laser channel (16) to generate magnetic fields to cross couple thermal and attachment instabilities.

8. A laser system as set forth in claim 7, wherein the magnetic field generating means comprises a plurality of annular permanent magnets (80) spaced longitudinally on the laser channel 16 and embracing the channel (16).

9. A laser system as set forth in claim 7, wherein the magnetic field generating means comprises a plurality of electromagnets (78) spaced longitudinally on the laser channel (16), and a source of D.C. voltage (82) connected to the electromagnets (78).

10. A laser system as set forth in any one of claims 2 to 9, wherein each electrode (32,34) has a passage formed therein and is disposed in concentric relation within each of the primary nozzles (28,30) and is connected to a source (52) of helium gas to introduce metastable helium atoms into the gas streams.

11. A laser system as set forth in any one of the preceding claims, wherein the means to draw forth a beam of light energy from the laser channel (16) comprises a pair of mirrors (18,20) disposed in mutually facing relation and fixed one at each end of the laser channel (16) to direct an output beam in a direction parallel to the laser channel (16).

12. A laser system as set forth in any one of claims 1 to 10, wherein the means to draw forth a beam of light energy from the laser channel (16) comprises an optical system arranged to direct the beam in a direction transverse to lasing gas flow and in a direction transverse to the laser channel (16).

13. A laser system as set forth in any one of the preceding claims, wherein the source of electric power (50) includes means for providing independent current regulation of each electrode (32,34,44,46).

14. A laser system as set forth in any one of the preceding claims, including a heat exchanger (48) disposed intermediate the laser channel (16) and the housing (10,12,14) whereby the continuous recirculating flow of the gas lasing medium passes through the heat exchanger (48).

15. A method of operating a $CO_2$ laser system according to any one of the preceding claims, the method comprising creating a plurality of parallel discharges between the upstream and downstream electrodes (32,34;44,46) to give a uniform large volume gaseous discharge in the laser channel (16); guiding a primary stream of the gas lasing medium in a recirculating path through the channel (16) wherein a pressure drop results; and introducing a secondary stream of the gas lasing medium at a higher pressure into the primary stream through the ejectors to effect diffusion of the streams, a pressure rise equal to the recirculating path pressure drop, and an increase in mass flow through the channel.

16. A method as set forth in claim 15, including the step of introducing a third gas stream of helium through the electrodes (32,34;44,46) to introduce metastable helium atoms into the gas streams and to inhibit metal sputtering.

**Patentansprüche**

1. Lasersystem hoher Ausgangsleistung, bestehend aus einem Gehäuse (10, 12, 14), einem in diesem Gehäuse (10, 12, 14) untergebrachten Lasergasmedium, einem Laserkanal (16) in diesem Gehäuse, Mittel zum Erzeugen einer kontinuierlichen Umwälzung dieses Lasergasmediums durch den Kanal, einer Vielzahl von Elektroden (32, 34) am stromaufwärtigen Ende (12) des Gehäuses (10, 12, 14) anliegend an einem Ende des Kanals (16), eine Vielzahl von Elektroden (44, 46) am stromabwärtigen Ende (14) des Gehäuses (10, 12, 14) anliegend am anderen Ende des Kanals (16), eine Quelle elektrischer Leistung (50), die an die Elektroden (32, 34, 44, 46) angeschlossen ist zwecks Aufbaus und Aufrechterhaltens der Entladungen im Laserkanal (16), Mittel zur gleichmäßigen Verteilung zwecks Sicherstellung eines gleichmäßigen Plasmastroms im Kanal und Erzeugen eines Druckanstiegs zum Ausgleich des Druckabfalls aufgrund des Umwälzstroms durch den Kanal (16), wobei diese Mittel zur gleichmäßigen Verteilung einen stromabwärts von der entsprechenden stromaufwärtsliegenden Elektrode (32, 34) angeordneten Ejektor zum Mischen und gleichmäßigen Verteilen von Gasströmen im Laserkanal (16), sowie Mittel zum Auslenken eines Lichtenergiestrahls aus diesem Kanal (16) umfassen.

2. Lasersystem gemäß Anspruch 1, wobei jeder Ejektor eine Primärdüse (28, 30) und eine Mischrohr (26, 24) aufweist und jede Primärdüse (28, 30) an eine Lasergasdruckquelle (64) angeschlossen ist, die außerhalb des Gehäuses (10, 12, 14) liegt.

3. Lasersystem gemäß Anspruch 2, einschließlich eines Wärmeaustauschers (68), der außerhalb des Gehäuses (10, 12, 14) angeordnet ist und in Strömungsverbindung mit der Primärdüse (28, 30) steht.

4. Lasersystem gemäß Anspruch 2 oder Anspruch 3, wobei jedes Mischrohr (26, 24) in seinem Ausgangsbereich eine aerodynamische Kontur aufweist.

5. Lasersystem gemäß Anspruch 4, wobei diese aerodynamische Kontur eine Kurve (29) in umgekehrter Kehlleistenform auf einer Seite des Mischrohrs, und einen Radiusabschnitt (35) an der anderen Seite aufweist, um dem Gasstrom beim Ausströmen eine Radialkomponente zu erteilen.

6. Lasersystem gemäß einem beliebigen der Ansprüche 2 bis 5, wobei das Verhältnis des Querschnitts der einzelnen Mischrohre (24, 26) zur Einschnürung der einzelnen Primärdüsen (30, 28) im wesentlichen 27,5:1 beträgt.

7. Lasersystem gemäß einem beliebigen der vorstehenden Ansprüche, einschließlich den Laserkanal (16) umgebender Mittel zum Erzeugen magnetischer Felder zur Beeinflussung thermischer und Zusatzgerät-Instabilitäten.

8. Lasersystem gemäß Anspruch 7, wobei diese magnetfelderzeugenden Mittel eine Vielzahl von ringförmigen Permanentmagneten (80) aufweisen, die beabstandet den Laserkanal entlang angeordnet sind und den Kanal (16) umgeben.

9. Lasersystem gemäß Anspruch 7, wobei die magnetfelderzeugenden Mittel eine Vielzahl von Elektromagneten (78), die beabstandet den Laserkanal (16) entlang angeordnet sind, sowie eine Gleichspannungsquelle (82), die an die Elektromagneten angeschlossen ist, aufweisen.

10. Lasersystem gemäß einem beliebigen der Ansprüche 2 bis 9, wobei in jeder Elektrode (32, 34) ein Durchlaß angebracht ist und sie konzentrisch zu der entsprechenden Primärdüse (28, 30) angeordnet ist, und sie mit einer Heliumgasquelle (52) verbunden ist, um metastabile Heliumatome in die Gasströme einzuführen.

11. Lasersystem gemäß einem beliebigen der vorstehenden Ansprüche, wobei die Mittel zum Lenken des Lichtenergiestrahls aus dem Laserkanal (16) ein Spiegelpaar (18, 20) umfassen, die sich einander gegenüberliegend jeweils an einem Ende des Laserkanals (16) angeordnet sind, um einen ausgehenden Strahl parallel zum Laserkanal (16) zu richten.

12. Lasersystem gemäß einem beliebigen der Ansprüche 1 bis 10, wobei die Mittel zum Lenken eines Lichtenergiestrahls aus dem Laserkanal (16) ein optisches System umfassen, das so angeordnet ist, daß es den Strahl quer zum Lasergasstrom und quer zum Laserkanal (16) richtet.

13. Lasersystem gemäß einem beliebigen der vorstehenden Ansprüche, wobei die Quelle der elektrischen Leistung (50) Mittel zum Vorsehen einer unabhängigen Stromregulierung für jede Elektrode (32, 34, 44, 46) aufweist.

14. Lasersystem gemäß einem beliebigen der vorstehenden Ansprüche, einschließlich eines Wärmeaustauschers (48), der in einer Zwischenstellung zwischen dem Laserkanal (16) und dem Gehäuse (10, 12, 14) angeordnet ist, wobei der kontinuierliche Umwälzstrom des Lasergasmediums durch diesen Wärmeaustauscher (48) strömt.

15. Verfahren zum Betrieb eines $CO_2$-Lasersystems gemäß einem beliebigen der vorstehenden Ansprüche, wobei dieses Verfahren das Erzeugen einer Vielzahl paralleler Entladungen zwischen den stromaufwärts und den stromabwärts liegenden Elektroden (32, 34; 44, 46), um eine gleichmäßig großvolumige Gasentladung im Laserkanal (16) zu erzeugen, das Führen eines Primärstroms des Gaslasermediums auf einem Umwälzpfad durch den Kanal (16), wobei ein Druckabfall auftritt, und Einführen eines Sekundärstroms des Lasergasmediums unter höherem Druck in den Primärstrom durch die Ejektoren zwecks Erzeugens der gleichmäßigen Verteilung, eines Druckanstiegs, der gleich ist mit dem Druckabfall im Umwälzpfad, und Erhöhung des Mengenstroms durch den Kanal beinhaltet.

16. Verfahren gemäß Anspruch 15, einschließlich des Schritts der Einführung eines dritten Gasstroms aus Helium durch die Elektroden (32, 34; 44, 46) zum Einleiten von metastabilen Heliumatomen in die Gasströme sowie Verhinderung der Metallzerstäubung.

## Revendications

1. Système laser à production de forte puissance comprenant un boîtier (10, 12, 14), un milieu gazeux soumis à l'effet laser contenu dans le boîtier (10, 12, 14), un canal laser (16) dans le boîtier, un moyen pour réaliser à travers le canal un flux recyclé continu du milieu gazeux soumis à l'effet laser, plusieurs électrodes (32, 34) à l'extrémité amont (12) du boîtier (10, 12, 14) près d'une extrémité du canal (16), plusieurs électrodes (44, 46) à l'extrémité aval (14) du boîtier (10, 12, 14) près de l'autre extrémité du canal (16), une source d'énergie électrique (50) reliée aux électrodes (32, 34, 44, 46) pour établir et maintenir des décharges dans le canal laser (16), un moyen de diffusion pour réaliser un flux de plasma uniforme dans le canal et pour provoquer une augmentation de pression afin de compenser la baisse de pression due à l'écoulement recyclé à travers le canal (16), le moyen de diffusion comprenant un éjecteur disposé en aval de chaque électrode amont respective (32, 34) pour mélanger et diffuser des courants gazeux dans le canal laser (16), et un moyen pour prélever du canal (16) un faisceau d'énergie lumineuse.

2. Système laser selon la revendication 1, dans lequel chaque éjecteur comprend un ajutage primaire (28, 30) et un tube de mélange (26, 24), chaque ajutage primaire (28, 30) étant relié à une source (64) de pression de gaz soumis à l'effet laser, extérieure au boîtier (10, 12, 14).

3. Système laser selon la revendication 2, comprenant un échangeur de chaleur (68) disposé à l'extérieur du boîtier (10, 12, 14) et se trouvant en communication fluidique avec l'ajutage primaire (28, 30).

4. Système laser selon la revendication 2 ou la revendication 3, dans lequel un contour aérodynamique est formé sur chaque tube de mélange (26, 24) à sa zone de sortie.

5. Système laser selon la revendication 4, dans lequel le contour aérodynamique comprend une courbe en S inversée (29) sur un côté du tube de mélange et une section à rayon de courbure (35) sur l'autre côté pour communiquer une composante radiale au flux de courant gazeux lors de sa sortie.

6. Système laser selon l'une quelconque des revendications 2 à 5 dans lequel le rapport entre la surface en coupe transversale de chaque tube de mélange respectif (24, 26) et la gorge de chaque ajutage primaire respectif (30, 28) est sensiblement de 27,5 à 1.

7. Système laser selon l'une quelconque des revendications précédentes, comprenant un moyen entourant le canal laser (16) pour engendrer des champs magnétiques en vue d'un couplage transversal d'instabilités thermiques et d'attache.

8. Système laser selon la revendication 7, dans lequel le moyen générateur de champ magnétique comprend plusieurs aimants permanents annulaires (28) espacés longitudinalement sur le canal laser (16) et embrassant le canal (16).

9. Système laser selon la revendication 7, dans lequel le moyen générateur de champ magnétique comprend plusieurs électroaimants (78) espacés longitudinalement sur le canal laser (16), et une source de tension en courant continu (82) reliée aux électroaimants (78).

10. Système laser selon l'une quelconque des revendications 2 à 9, dans lequel chaque électrode (32, 34) comprend un passage qui y est ménagé, est disposée en relation concentrique à l'intérieur de chacun des ajutages primaires (28, 30) et est relié à une source (52) d'hélium gazeux pour introduire des atomes métastables d'hélium dans les courants gazeux.

11. Système laser selon l'une quelconque des revendications précédentes dans lequel le moyen de prélèvement d'un faisceau d'énergie lumineuse à partir du canal laser (16) comprend une paire de miroirs (18, 20) disposés en relation de face-à-face et fixés chacun à une extrémité du canal laser (16) pour diriger un faisceau de sortie dans une direction parallèle au canal laser (16).

12. Système laser selon l'une quelconque des revendications 1 à 10, dans lequel le moyen de prélèvement d'un faisceau d'énergie lumineuse à partir du canal laser (16) comprend un système optique agencé pour diriger le faisceau dans une direction transversale au flux gazeux soumis à l'effet laser et dans une direction transversale au canal laser (16).

13. Système laser selon l'une quelconque des revendications précédentes, dans lequel la source d'énergie électrique (50) comprend un moyen pour réaliser un réglage indépendant de courant pour chaque électrode (32, 34, 44, 46).

14. Système laser selon l'une quelconque des revendications précédentes, comprenant un échangeur de chaleur (48) disposé de façon intermédiaire entre le canal laser (16) et le boîtier (10, 12, 14), grâce à quoi le flux recyclé de façon continue du milieu gazeux soumis à l'effet laser traverse l'échangeur de chaleur (48).

15. Procédé de mise en oeuvre d'un système laser à $CO_2$ selon l'une quelconque des revendications précédentes, le procédé comprenant les étapes consistant à créer plusieurs décharges parallèles entre les électrodes amont et aval (32, 34; 44, 46) pour produire une décharge gazeuse uniforme de grand volume dans le canal laser ; à guider à travers le canal (16) un courant primaire du milieu gazeux soumis à l'effet laser dans un trajet de recyclage dans lequel apparaît une baisse de pression ; et à introduire dans le courant primaire à travers les éjecteurs un courant secondaire du milieu gazeux soumis à l'effet laser à une pression plus élevée pour effectuer une diffusion des courants, une augmentation de pression égale à la baisse de pression du trajet de recyclage, et une augmentation du flux massique à travers le canal.

16. Procédé selon la revendication 15, comprenant l'étape consistant à introduire un troisième courant gazeux d'hélium à travers les électrodes (32, 34; 44, 46) pour introduire dos atomes métastables d'hélium dans les courants gazeux et pour inhiber la pulvérisation cathodique de

métal.

FIG. 1

FIG. 2

FIG. 3

FIG. 4

80

N S    S N    N S

N S    S N    N S

RESULTANT
FIELD        FIG.5        16

82

N S    N S    N S

N S    N S    N S

78        16

FIG. 6

14

FIG. 7

FIG. 8